(19) Europäisches Patentamt
European Patent Office
Office européen des brevets

(11) Veröffentlichungsnummer: **0 005 549**
**B1**

(12) **EUROPÄISCHE PATENTSCHRIFT**

(21) Anmeldenummer: **79101519.1**

(22) Anmeldetag: **18.05.79**

(51) Int. Cl.$^3$: **D 06 N 3/14**, C 08 J 9/00, C 08 G 18/67, C 08 G 18/63, D 06 M 15/52

(54) **Verfahren zur Herstellung von mit Polyurethanschaum beschichteten Textilien.**

(30) Priorität: **24.05.78 US 909156**

(43) Veröffentlichungstag der Anmeldung:
**28.11.79 Patentblatt 79/24**

(45) Bekanntmachung des Hinweises auf die Patenterteilung:
**11.02.81 Patentblatt 81/6**

(84) Benannte Vertragsstaaten:
**DE FR GB IT SE**

(56) Entgegenhaltungen:
**DE - A - 2 557 858**
**DE - A - 2 748 085**
**US - A - 3 772 224**
**US - A - 3 849 156**
**US - A - 3 860 537**
**US - A - 4 041 104**

**CHEMICAL ABSTRACTS, Vol. 83, Nr. 6, August 11, 1975**
**Columbus, Ohio, US,**
**Zusammenfassung Nr. 44373s**

(73) Patentinhaber: **Mobay Chemical Corporation**
**Penn Lincoln Parkway West**
**Pittsburgh, Pennsylvania 15205 (US)**

(72) Erfinder: **Bailey, Robert, J.**
**323 Jenny Lynn Drive**
**Coraopolis, Pennsylvania 15 108 (US)**

(74) Vertreter: **Müller, Heinz-Gerd, Dipl.-Ing. et al,**
**c/o Bayer AG Zentralbereich Patente Marken und Lizenzen**
**D-5090 Leverkusen 1, Bayerwerk (DE)**

**EP 0 005 549 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von mit Polyurethanschaum beschichteten Textilien

Die vorliegende Erfindung betrifft ein Verfahren, wobei in einer ersten Stufe ein hitzehärtbarer Schaum oder ein schäumfähiges Reaktionsgemisch aus Polyurethanbildenden Komponenten auf die Rückseite eines Textilmaterials aufgetragen, in einer zweiten Stufe das beschichtete Textil erhitzt wird, bis eine voll aufgeschäumte, gelierte, klebfreie, lagerbeständige aber noch thermoplastische Beschichtung entstanden ist und in einer dritten Stufe schließlich der Verbund aus textilem Substrat und Schaumbeschichtung in einer geheizten Form geformt und ausgehärtet wird. Erfindungswesentlich ist, daß die Polyurethanformulierung einen Hydroxy-funktionellen Ester einer Acryl- oder Alkylacrylsäure und einen freien Radikalinitiator enthält.

Bei der vorliegenden Erfindung handelt es sich um eine Weiterentwicklung bekannter Herstellungsverfahren für räumlich geformte, mit Polyurethanschaum beschichtete Textilien (insbesondere Teppiche) durch Heißverpressen in Formen, wobei die Beschichtung nach dem Entformen genügend starr sein soll, um die dreidimensionale Form beizubehalten, jedoch flexibel genug, daß sie bei Biegebeanspruchung nicht bricht. Bekannte Verfahren (siehe z.B. DE—OS 2 748 085) zur Herstellung derartiger schaumbeschichteter Textilien umfassen die Applikation eines hitzehärtbaren Schaums oder eines schäumfähigen Reaktivgemischs aus Polyurethan-bildenden Komponenten auf die Rückseite eines Textils, worauf das Polyurethan, vorzugsweise unter Einwirkung von Hitze, bis zu einem klebfreien, gelierten Zustand ausgehärtet wird. Das beschichtete Gewebe wird dann in Stücke geschnitten und unter Einwirkung von Druck und Hitze in einer geeigneten Form in die gewünschte dreidimensionale Gestalt übergeführt.

Die Hauptschwierigkeit dieses bekannten Verfahrens besteht darin, ein System zu formulieren, welches auch in großindustriellem Rahmen dem oben geschilderten mehrstufigen Verfahren unterworfen werden kann. Mit den bisher bekannt gewordenen Rezepturen ist es nicht möglich gewesen, eine klebfreie, gelierte, noch thermoplastische Schaumbeschichtung herzustellen, welche über längere Zeit hinweg lagerbeständig bleibt und später zu einer gewünschten Zeit in Stücke geschnitten und, wie oben beschrieben, rasch verformt und zu einem Material ausgehärtet werden kann, welches gleichzeitig formstabil und ausreichend flexibel ist.

Die Beschichtung von Textilien mit Schaumstoff unter anschließender Verformung des Laminates ist im Prinzip z.B. aus den US-Patentschriften 3 046 177, 3 175 936, 3 440 307, 3 772 224 und 3 849 156 bekannt. Keines dieser bekannten Verfahren erlaubt jedoch die Herstellung lagerstabiler Zwischenprodukte, welche später zu konturstabilen Laminaten hitzeverformt werden können.

In US—PS 3 860 537 wird ein Schaum beschrieben, welcher in aufgerolltem Zustand gelagert und später geformt werden kann. Das Verfahren erfordert jedoch den Einsatz beträchtlicher Mengen an ethylenisch ungesättigten Polyestern zusammen mit einem ethylenisch ungesättigten Monomeren, welches mit dem Polyester copolymerisierbar ist. Der Hauptnachteil des Verfahrens liegt darin, daß der Verfahrensschritt der Aushärtung unter Formgebung Formstandzeiten von 30 bis 35 Minuten benötigt (siehe die Beispiele 1 und 10 der Patentschrift), was die Verarbeitung der Schäume unwirtschaftlich erscheinen läßt. Das Patent gibt darüber hinaus keinen Hinweis auf die Beschichtung von Textilien oder anderen Substraten.

Die vorliegende Erfindung stellt demgegenüber ein Verfahren zur Herstellung geformter, mit einem Polyurethanschaum beschichteter Textilien zur Verfügung, wobei das Polyurethan-Reaktivgemisch auf das Substrat ohne merkliche Reaktion aufgetragen werden kann, so daß das Gemisch leicht handhabbar bleibt. Das beschichtete Textil wird danach erwärmt, um die Schaumbeschichtung in einen gelierten, klebfreien, lagerbeständigen Zustand überzuführen. Zu einem beliebigen Zeitpunkt kann dann das so erhaltene lagerfähige Zwischenprodukt mit sehr kurzen Zykluszeiten (ca. 30 Sekunden bis 1 Minute) hitzeverformt werden, wobei ein schaumbeschichtetes Textil mit hervorragender Formbeständigkeit erhalten wird. Die erwähnten Eigenschaften des Polyurethanbildenden Gemischs werden erfindungsgemäß dadurch erreicht, daß man ein hydroxyfunktionelles Acrylat zusammen mitr einem freien Radikalinitiator mitverwendet, wodurch die Formstandzeiten erheblich abgekürzt werden. Die Verwendung von hydroxyfunktionellen Acrylaten in der Polyurethan-chemie ist zwar nicht neu (so sei z.B. auf die sogenannten "Polymer-Polyole" der US-Patentschriften 3 383 351, 3 523 093, 3 576 706 und 3 652 639 hingewiesen; Beschichtungsverfahren werden in US—PS 3 919 351, 3 975 457 und 3 989 609 beschrieben; US—PS 3 954 584 betrifft eine fotopolymerisierbare Vinylurethan-Masse und US—PS 4 052 282 ein durch UV-Licht härtbares Verbandmaterial), jedoch ist bisher noch kein einschlägiges Verfahren bekannt geworden, wobei derartige Gemische für die Herstellung hitzeverformbarer Polyurethanschäume bzw. Textilbeschichtungen eingesetzt werden.

Gegenstand der vorliegenden Erfindung ist somit ein Verfahren zur Herstellung eines dreidimensional geformten, mit einer Polyurethanschaumbeschichtung versehenen Textils, wobei man

A) in einer ersten Stufe ein geschäumtes bzw. schäumfähiges Reaktivgemisch Polyurethan-bildender Komponenten bestehend aus

1. einer Polyisocyanat,
2. einer organischen Verbindung mit mindestens 2 gegenüber Isocyanaten reaktiven Wasserstoffatomen und einem Molekulargewicht zwischen 400 und 16000, welche im wesentlichen keine ethylenisch ungesättigten Gruppen enthält,
3. einem hitzeaktivierbaren Katalysator für die Reaktion der Komponenten 1 und 2,
4. einem Treibmittel bzw. einem den Schaum bildenden inerten Gas und
5. einem oberflächenaktiven Mittel als Schaumstabilisator

aa

aufträgt,

B) in einer zweiten Stufe das beschichtete Textil 15 Sekunden bis 10 Minuten lang bei 25 bis 120°C hält, bis die Polyurethan-bildenden Komponenten einen gelierten, klebfreien, noch thermoplastischen Schaum gebildet haben und

C) das schaumbeschichtete Textil durch Heißverpressen unter Verformung aushärtet,

welches dadurch gekennzeichnet ist, daß das Polyurethan-bildende Reaktionsgemisch als zusätzliche Komponenten

6. einen freien Radikalinitiator und
7. einen mindestens eine Hydroxylgruppe aufweisenden Ester von Acrylsäure oder einer Alkylacrylsäure enthält, vorzugsweise eine Verbindung der allgemeinen Formel

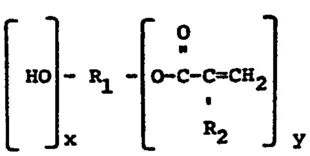

in welcher

$R_1$ einen x + y -wertigen, gegebenenfalls verzweigten Alkylen-, Arylen- oder Aralkylenrest mit 1 bis 18 C-Atomen und

$R_2$ Wasserstoff oder eine Alkylgruppe mit 1 bis 18 C-Atomen darstellen und wobei

x und y für ganze Zahlen zwischen 1 und 7 stehen, die Summe aus x und y jedoch 8 nicht überschreitet.

Vorzugsweise werden erfindungsgemäß Hydroxyacrylate der oben erwähnten Formel eingesetzt, in welcher $R_1$ für eine Alkylengruppe mit 1 bis 4 C-Atomen und $R_2$ für Wasserstoff oder eine Methylgruppe stehen und in welcher x und y beide 1 sind. Erfindungsgemäß besonders bevorzugt sind 2-Hydroxyethylacrylat und 2-Hydroxypropylacrylat.

Der Schritt C) des erfindungsgemäßen Verfahrens kann darin bestehen, das schaumbeschichtete Textil in eine geheizte Form einzubringen, in welcher zumindest die Polyurethanseite des Laminats für einen Zeitraum von etwa 15 Sekunden bis 5 Minuten einer Temperatur von ca. 90 bis 180°C und einem Druck von etwa 0,07 bis 1,4 bar ausgesetzt wird. Es ist jedoch auch möglich, das schaumbeschichtete Textil selbst auf eine Temperatur von etwa 90 bis 180°C zu erwärmen und dann in einer nicht beheizten Form im oben angegebenen Zeitraum zu verpressen. Das Erwärmen des schaumbeschichteten Textils geschieht dabei vorzugsweise, während das Textil flach ausgebreitet ist und kann durch alle an sich bekannten Verfahren erfolgen, z.B. mittels heißer Luft, Infrarotstrahlung, Mikrowellenstrahlung etc.

Die erfindungsgemäße Mitverwendung von Hydroxy-funktionellen Acrylaten und freien Radikalinitiatoren ermöglicht die Herstellung lagerbeständiger, thermoplastischer Zwischenprodukte, welche sehr rasch durch Erhitzen ausgehärtet werden können. Erfindungsgemäß geeignete Hydroxy-funktionelle Acrylate sind z.B. 2-Hydroxyethylacrylat, 2-Hydroxypropylacrylat, 2-Hydroxyethylmethacrylat, 2-Hydroxypropylmethacrylat, 4-Hydroxybutylacrylat, Hydroxyoctylmethacrylat und Mischungen dieser Verbindungen. In Frage kommen jedoch auch nur partiell mit Acrylsäure veresterte Polyole wie z.B. das Mono-, Di- und Triacrylat von Pentaerythrit, das Diacrylat von Trimethylolpropan, Acrylate von Mannit und Saccharose etc. Selbstverständlich ist es auch möglich, teilweise mit Acrylsäure oder einer Alkylacrylsäure veresterte Polyetherpolyole der an sich bekannten Art einzusetzen. Allgemein kommen für das erfindungsgemäße Verfahren beliebige an sich bekannte Verbindungen in Frage, welche durch teilweise Veresterung eines Diols oder Polyols mit Acrylsäure, Methacrylsäure oder anderen Alkylacrylsäuren hergestellt worden sind und welche mindestens eine Hydroxylgruppe und mindestens eine Acrylat-, Methacrylat- oder Alkylacrylat-Gruppe enthalten. Diese Verbindungen werden erfindungsgemäß vorzugsweise in einer Menge von 0,5 bis 50 Gew.-%, insbesondere 5 bis 20 Gew.-%, besonders bevorzugt 8 bis 15 Gew.-%, bezogen auf Gewicht der Komponente 2 des Reaktivgemischs, zugesetzt.

Für das erfindungsgemäße Verfahren kommen alle an sich bekannten freien Radikalinitiatoren in Frage, welche die Polymerisation von Kohlenstoff-Kohlenstoff-Doppelbindungen polymerisieren können und welche vorzugsweise eine Halbwertszeit von weniger als 1

Minute bei der Verformungstemperatur aufweisen.

Zu diesen Initiatoren gehören die Peroxide, Persulfate, Perborate, Percarbonate, Azoverbindungen, etc., z.B. Wasserstoffperoxid, Dibenzoylperoxid, Acetylperoxid, Benzoylhydroperoxid, t-Butylhydroperoxid, Di-t-Butylperoxid, Laurylperoxid, Butyrylperoxid, Diisopropylbenzolhydroperoxid, Cumol-hydroperoxid, Paramenthan-hydroperoxid, Diacetylperoxid, Di-$\alpha$-Cumylperoxid, Dipropylperoxid, Diisopropylperoxid, Isopropyl-t-butylperoxid, Butyl-t-butylperoxid, Dilaurylperoxid, Difurylperoxid, Ditriphenylmethylperoxid, Bis-(p-methoxybenzoyl)-Peroxid, p-Monomethoxybenzoylperoxid, Ascaridol, p-Butylperoxybenzoesäureester, Diethylperoxyterephthalat, Propylhydroperoxid, Isopropylhydroperoxid, n-Butylhydroperoxid, t-Butylhydroperoxid, Cyclohexylhydroperoxid, trans-Decalinhydroperoxid, $\alpha$-Methylbenzylhydroperoxid, $\alpha$-Methyl- $\alpha$-ethylbenzylhydroperoxid, Tetralinhydroperoxid, Triphenylmethylhydroperoxid, Diphenylmethylhydroperoxid, $\alpha,\alpha$-Azo-2-methylbutyronitril, $\alpha,\alpha$-2-methylheptonitril, 1,1′-Azo-1-cyclohexancarbonitril, Dimethyl- $\alpha,\alpha'$-azoisobutyrat, 4,4′-Azo-4-cyanopentansäure, Azobisisobutyronitril, Perbernsteinsäure, Diisopropylperoxydicarbonat und Gemische dieser Verbindungen. Azobisisobutyronitril, gegebenenfalls gelöst in einem geeigneten organischen Lösungsmittel, ist der erfindungsgemäß bevorzugte Radikalinitiator. Der Initiator wird vorzugsweise in einer Menge von 0,01 bis 1 Teil, besonders bevorzugt 0,05 bis 0,5 Teilen, bezogen auf 100 Teile der Komponente 2 des Reaktivgemisches, zugesetzt.

Neben den erfindungswesentlichen Hydroxy-funktionellen Acryl- bzw. Alkylacrylsäureestern können gegebenenfalls auch andere Hydroxy-funktionelle, ethylenisch ungesättigte Verbindungen in einer Menge von 0 bis 50 Gew.-%, vorzugsweise 8 bis 15 Gew.-%, bezogen auf das Gewicht von Komponente 2, mitverwendet werden. Beispiele für derartige Verbindungen sind Butadien-homopolymere mit endstandigen Hydroxylgruppen, Butadien-Styrol-copolymere mit endständigen Hydroxylgruppen und Butadien-Acrylnitril-copolymere mit endständigen Hydroxylgruppen (beispielsweise die Produkte der Firma ARCO), Trimethylolpropan-di-2-propenylether etc. Diese Verbindungen reichen jedoch allein nicht ause, um einem schaumbeschichteten Textil ausreichende Konturfestigkeit zu verleihen. Ein Nachteil dieser gegebenenfalls mitzuverwendenden Verbindungen ist, daß sie in manchen Fällen in Komponente 2 des erfindungsgemäß einzusetzenden Reaktivsystems nur wenig löslich sind.

Prinzipiell können erfindungsgemäß alle an sich bekannten Rezepturen für Polyurethanschäume angewandt werden, wenn auch bestimmte Formulierungen sich für das erfindungsgemäße Verfahren als besonders geeignet erwiesen haben. Häufig ist es bevorzugt. zusätzlich zu dem Polyisocyanat, der höhermolekularen Verbindung mit aktiven Wasserstoffatomen, dem Schaumstabilisator, dem hitzeaktivierbaren Katalysator und dem Treibmittel bzw. Inertgas ein Kettenverlängerungsmittel und auch anorganische Füllstoffe mitzuverwenden.

Für das erfindungsgemäße Verfahren geeignete Verbindungen mit wenigstens zwei gegenüber Isocyanaten reaktiven Wasserstoffatomen und einem Molekulargewicht zwischen etwa 400 und 16000 sind an sich bekannt. Diese Verbindungen sollten erfindungsgemäß im wesentlich keine ethylenisch ungesättigte Gruppen aufweisen. Es ist bekannt, daß die meisten technisch verwendeten Polyetherpolyole sehr geringe Mengen an endständigen ungesättigten Gruppen aufweisen. Unter "im wesentlichen keine ethylenisch ungesättigten Gruppen" im Sinne der vorliegenden Erfindung ist zu verstehen, daß Komponente 2 nicht so viele ethylenisch ungesättigte Gruppen enthält, daß sie wesentlich in die freie Radikalpolymerisation mit der Kohlenstoff-Kohlenstoff-Doppelbindung des Acrylats in Stufe C des erfindungsgemäßen Verfahrens eingreigen.

Neben Verbindungen mit Aminogruppen, Diolgruppen oder Carboxylgruppen sind erfindungsgemäß insbesondere Polyhydroxylverbindungen geeignet. Bevorzugt sind dabei Verbindungen mit 2 bis 8 Hydroxylgruppen und einem Molekulargewicht zwischen 800 und 10000, besonders bevorzugt zwischen 1000 und 6000. Beispiele hierfür sind Polyester, Polyether, Polythioether, Polyacetale, Polycarbonate und Polyesteramide mit mindestens 2, vorzugsweise 2 bis 8, besonders bevorzugt 2 bis 4 Hydroxylgruppen, wie sie für die Herstellung von homogenen und zellförmigen Polyurethanen an sich bekannt sind.

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid,

Hexahydrophthalsäureanhydrid, Tetrachlorphthalsäureanhydrid, Endomethylentetrahydrophthalsäureanhydrid, Glutarsäureanhydrid, Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus hydroxycarbonsäuren, z.B. ω-Hydroxycapronsäure, sind einsetzbar.

b) Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähiger. Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen.

c) Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

d) Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäß geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten Carbonsäure- bzw. deren Anhydriden und mehrwertigen gesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke sind verwendbar. Auch Anlagerungsprodukte von Alkylenoxiden an Phenol-Formaldehyd-Harze oder auch an Harnstoff-Formaldehydharze sind erfindungsgemäß einsetzbar.

h) Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verundenen verschiedenen Segmenten aufgebaut ist. Es ist auch möglich, z.B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen

Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Adiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen läßt. Derartige. Verfahren sind beispielsweise in den DE-Auslegeschriften 1 168 075 und 1 260 142, sowie den DE-Offenlegungsschriften 2 324 134, 2 423 984, 5 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in gegenwart von Polyäthern (US—Patentschriften 3 383 351, 3 304 273, 3 523 093, 3 110 695; DE—Auslegeschrift 1 152 536) oder Polycarbonatpolyolen (DE—Patentschrift 1 769 795; US—Patentschrift 3 637 909) erhalten werden, sind für das erfindungsgemäße Verfahren geeignet. Bei Verwendung von Polyätherpolyolen, welche gemäß den DE—Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE—Offenlegungsschriften 2 714 291; 2 739 620 und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z.B. auf den Seiten 45—71, beschrieben. Selbstverständlich können Mischungen der obengenannten Verbindungen mit mindestens zwei gegenüber Isocyanaten reaktionsfähigen Wasserstoffatomen mit einem Molekulargewicht von 400—16000, z.B. Mischungen von Polyäthern und Polyestern, eingesetzt werden.

Erfindungsgemäß bevorzugt sind als Komponente 2 vorwiegend primäre Hydroxylgruppen aufweisende Polyether mit einem Molekulargewicht zwischen 400 und 10000, insbesondere zwischen 2000 und 6000, und mit Hydroxylzahlen von etwa 15 bis 100, insbesondere von 28 bis 56. Polyester sind wegen ihrer im allgemeinen geringeren Hydrolysenfestigkeit erfindungsgemäß weniger bevorzugt.

Es ist erfindungsgemäß bevorzugt aber nicht zwingend erforderlich, Verbindungen mit mindestens zwei gegenüber Isocyanaten reaktionsfähigen Wasserstoffatomen und einem Molekulargewicht von 32 bis 400 als Kettenverlängerungsmittel, und zwar in einer Menge von etwa 0,5 bis 30 Gew.-%, insbesondere 5 bis 15 Gew.-%, bezogen auf Gewicht der Komponente 2, mitzuverwenden.

Auch in diesem Fall versteht man hierunter Hydroxylgruppen und/oder Aminogruppen und/oder Thiolgruppen und/oder Carboxygruppen aufweisende Verbindungen, vorzugsweise Verbindungen, wie sie als Kettenverlängerungsmittel oder Vernetzungsmittel an sich bekannt sind. Diese Verbindungen weisen in der Regel 2 bis 8, vorzugsweise 2 bis 4, gegenüber Isocyanaten reaktionsfähige Wasserstoffeatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Äthylenglykol, Proplenglykol-(1,2) und (1,3), Butylenglykol-(1,4) und -(2,3), Pentadiol-(1,5), Hexandiol-(1,6), Octandiol-(1,8), Neopentylglykol, 1,4-Bis-hydroxymethyl-cyclohexan, 2-Methyl-1,3-propandiol, Glycerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Äthanolamin, Di-äthanolamin, N-Methyldiäthanolamin, Tri-äthanolamin un 3-Aminopropanol.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit") in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE—Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE—Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE—Offenlegungsschrift 2 638 759).

Erfindungsgemäß geeignete aliphatische Diamine sind beispielweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE—Offenlegungsschrift 2 638 731) und cycloaliphatische Triamine gemäß DE—Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide wie z.B. β-Semicarbazidopropionsäurehydrazid (DE—Offenlegungsschrift 1 770 591), Semicarbazidoalkylencarbazinester wie z.B. 2-Semicarbazidoäthyl-carbazinester (DE—Offenlegungsschrift 1 918 504) oder auch Amino-semicarbazid-Verbindungen wie z.B. β-Aminoäthyl-semicarbazido-carbonat (DE—Offenlegungsschrift 1 902 931).

Als Beispiele für aromatische Diamine seien Bisanthranilsäureester gemäß den DE—Offenlegungsschriften 2 040 644 und 2 160 590, 3,5- und 2,4-Diaminobenzoesäureester gemäß DE—Offenlegungsschrift 2 025 900, die in den DE—Offenlegungsschriften 1 803 635 (US—Patentschriften 3 681 290 und 3 736 350), 2 040 650 und 2 160 589 beschriebenen estergruppenhaltigen Diamine, die Äthergruppen aufweisenden Diamine gemäß DE—Offenlegungsschriften 1 770 525 und 1 809 172 (US—Patentschriften 3 654 364 und 3 736 295), gegebenenfalls in 5-Stellung substituierte 2-Halogen-1,3-Phenylendiamine (DE—Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE—Offenlegungsschrift 2 404 976), Diaminodiphenyldithioether (DE—Offenlegungsschrift 2 509 404), durch Alkylthiogruppen substituierte aromatische Diamine (DE—Offenlegungsschrift 2 638 760), Diaminobenzolphosphonsäureester (DE—Offenlegungsschrift 2 459 491), Sulfonat- oder Carboxylatgruppen enthaltende aromatische Diamine (DE—Offenlegungsschrift 2 720 166) sowie die in der DE—Offenlegungsschrift 2 635 400 aufgeführten hochschmelzenden Diamine genannt. Beispiele für aliphatisch-aromatische Diamine sind die Aminoalkylthioaniline gemäß DE—Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z.B. Glycin, Alanin, Valin, Serin und Lysin sowie gegebenenfalls

substituierte Dicarbonsäuren, beispielsweise Bernsteinsäure, Adipinsäure, Phthalsäure, 4-Hydroxyphthalsäure und 4-Aminophthalsäure verwendet werden.

Als Isocyanatkomponente 1 kommen für das erfindungsgemäße Verfahren im Prinzip alle an sich bekannten organischen Polyisocyanate in Betracht, z.B. die von W. Siefken in Justus Liebigs Annalen der Chemie, 562, Seiten 75—136, beschriebenen aliphatischen, cycloaliphatischen, araliphatischen, aromatischen und heterocyclischen Polyisocyanate, beispielsweise solche der Formel

$$Q\ (NCO)_n$$

in der

n = 2—4, vorzugsweise 2,

und

Q einen aliphatischen Kohlenwasserstoffrest mit 2—18, vorzugsweise 6—10 C-Atomen,
einen cycloaliphatischen Kohlenwasserstoffrest mit 4—15, vorzugsweise 5—10 C-Atomen,
einen aromatischen Kohlenwasserstoffrest mit 6—15, vorzugsweise 6—13 C-Atomen,
oder einen araliphatischen Kohlenwasserstoffrest mit 8—15, vorzugsweise 8—13 C-Atomen,

bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE—Auslegeschrift 1 202 785, US—Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4', 4''-triisocyanat, Polyphenyl-polymethylen-polyisocyanate, wie sie durch Anilin-Formaldehyd-Kondensation und anschließende Phosgenierung erhalten und z.B. in den GB—Patentschriften 874 430 und 848 671 beschrieben werden, m- und p-Isocyanatophenylsulfonylisocyanate gemäß der US—Patentschrift 3 454 606, perchlorierte Arylpolyisocyante, wie sie z.B. in der DE—Auslegeschrift 1 157 601 (US—Patentschrift 3 277 138) beschrieben werden, Carbodiimidgruppen aufweisende Polyisocyanate, wie sie in der DE—Patentschrift 1 092 007 (US—Patentschrift 1 152 162) sowie in den DE—Offenlegungsschriften 2 504 400, 2 537 685 und 2 552 350 beschrieben werden, Norbornan-Diisocyanate gemäß US—Patentschrift 3 492 330, Allophanatgruppen aufweisende Polyisocyanate, wie sie z.B. in der GB—Patentschrift 994 890, der BE—Patentschrift 761 626 und der NL-Patentanmeldung 7 102 524 beschrieben werden, Isocyanuratgruppen aufweisende Polyisocyanate, wie sie z.B. in der US—Patentschrift 3 001 973, in den DE—Patentschriften 1 022 789, 1 222 067 und 1 027 394 sowie in den DE—Offenlegungsschriften 1 929 034 und 2 004 048 beschrieben werden, Urethangruppen aufweisende Polyisocyanate, wie sie z.B. in der BE—Patentschrift 752 261 oder in den US—Patentschriften 3 394 164 und 3 644 457 beschrieben werden, acylierte Harnstoffgruppen aufweisende Polyisocyanate gemäß der DE—Patentschrift 1 230 778, Biuretgruppen aufweisende Polyisocyanate, wie sie z.B. in den US—Patentschriften 3 124 605, 3 201 372 und 3 124 605 sowie in der GB—Patentschrift 889 050 beschrieben werden, durch Telomerisationsreaktionen hergestellte Polyisocyanate, wie sie z.B. in der US—Patentschrift 3 654 106 beschrieben werden, Estergruppen aufweisende Polyisocyanate, wie sie z.B. in den GB—Patentschriften 965 474 und 1 072 956, in der US—Patenschrift 3 567 763 und in der DE—Patentschrift 1 231 688 gennant werden, Umsetzungsprodukte der obengenannten Isocyanate mit Acetalen gemäß der DE—Patentschrift 1 072 385 und polymere Fettsäureester enthaltende Polyisocyanate gemäß der US—Patentschrift 3 455 883.

Es ist auch möglich, die bei der technischen Isocyanat herstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Erfindungsgemäß is es in der Regel bevorzugt, die technisch leicht zugänglichen Polyisocyanate, z.B. das 2,4-und 2,6-Toluylendiisocyanat sowie beliebige Gemische dieser Isomeren ("TDI") einzusetzen. Besonders bevorzugt sind Polyphenyl-polymethylen-polyisocyanate, wie sie durch Anilin-formaldehyd-Kondensation und anschließende Phosgenierung hergestellt werden ("rohes MDI"). Die mittlere Funktionalität dieses rohen MDI kann zwischen 2,0 und 4,0 schwanken, liegt jedoch vorzugsweise zwischen 2,5 und 3,0. Insbesondere geeignet sind auch von diesen Polyisocyanaten abgeleitete, Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate").

Präpolymere mit endständigen Isocyanatgruppen können im erfindungsgemäßen Verfahren ebenfalls eingesetzt werden. Solche Präpolymere werden erhalten, indem man einen stöchiometrischen Überschuß eines Polyisocyanats mit einer aktiven Wasserstoff aufweisenden Verbindung umsetzt. Auch blockierte Isocyanate, welche erhalten werden, wenn man ein Polyisocyanat mit einem monofunktionellen Blockierungsmittel wie einem Phenol umsetzt, können eingesetzt werden.

Erfindungsgemäß wird vorzugsweise ein Verschäumungsindex (Äquivalentverhältnis von Isocyanatgruppen zu aktiven Wasserstoffatomen, multipliziert mit 100) im Bereich zwischen etwa 100 und 200, besonders bevorzugt zwischen 125 und 150, eingehalten.

Eine besonders bevorzugte Variante des erfindungsgemäßen Verfahrens besteht darin, zumindest einen Teil der Polyisocyanatkomponente 1 mit dem hydroxyfunktionellen Acrylat 7 umzusetzen. Es ist bekannt, daß Acrylate bei empfindlichen Personen Allergien hervorrufen können. Die erwähnte Verfahrensvariante ermöglicht es, das Acrylat nur einmal zu handhaben und nicht als relativ leicht verdampfbare Komponente in der Polyurethanrezeptur einzusetzen, welche häufig vom Hersteller zum Verarbeiter transportiert werden muß. Ein solches Präpolymer kann hergestellt werden, indem man das gesamte Polyisocyanat oder einen Teil davon mit dem Hydroxyacrylat unter Bedingungen umsetzt, wie sie für die Herstellung von Präpolymeren mit endständigen NCO-Gruppen aus Polyisocyanaten + Polyhydroxylverbindungen an sich bekannt sind.

Erfindungsgemäß ist es bevorzugt, den Schaum durch mechanisches Einbringen eines Inertgases in die Polyurethan-bildenden Komponenten zu erzeugen, d.h. nicht die übliche Verschäumungstechnik unter Verwendung von Wasser oder leicht flüchtigen organischen Lösungsmitteln als Treibgas anzuwenden. Diese sogenannten Schlagschäume werden in üblicher Weise durch Dispergieren eines inerten Gases in der Polurethan-Reaktionsmischung hergestellt, wobei ein hitzehärtabarer Schaum entsteht. Wendet man, wie im erfindungsgemäßen Verfahren, hitzeaktivierbare Katalysatoren an, so ist dieser Schaum physikalisch und chemisch stabil und bei Raumtemperatur über längere Zeiträume verarbeitbar. Die Schlagschaumtechnik ist an sich bekannt und wird z.B. in den US—Patentschriften 3 108 976, 3 772 224 und 3 849 156 bescrieben. Durch Variation der Menge an eingerührtem Inertgas kann die Schaumdichte auf den gewünschten Wert eingestellt werden. Die Dichte des Schlagschaums ist im wesentlichen dieselbe wie jene des fertig ausgehärteten Schaums.

Für das erfindungsgemäße Verfahren geeignete konventionelle Treibmittel sind die aus der Polyurethanchemie an sich bekannten Verbindungen wie z.B. Halogen-substituierte Alkane (Methylenchlorid, Chloroform, Ethylidenchlorid, Vinylidenchlorid, Monofluortrichlormethan, Chlordifluormethan und Dichlordifluormethan), Butan, Hexan, Heptan oder Diethylether. Eine Treibwirkung kann auch durch Zusatz von Verbindungen erzielt werden, welche sich bei erhöhter Temperatur spontan unter Gasabspaltung (z.B. Stickstoff) zersetzen. Weitere Beispiele von Treibmitteln und Einzelheiten hinsichtlich der Verwendung von Treibmitteln finden sich im Kunststoff-Handbuch Band VII, herausgegeben von Vieweg und Höchtlen, Carl-Hanser-Verlag, München 1966, auf den Seiten 108, 109, 453 bis 455 und 507 bis 510. Diese Treibmittel können in Mengen von 0 bis 10 Gew.-%, bezogen auf Reaktionsgemisch, eingesetzt werden.

Setzt man, wie es erfindungsgemäß bevorzugt ist, als hitzeaktivierbare Katalysatoren die unten näher beschriebenen Amidine ein, so werden diese vorzugsweise in Kombination mit einer mono-oder difunktionellen Carbonsäure mit 1 bis 30 C-Atomen (besonders bevorzugt) einer gegebenenfalls Halogen-substituierten aliphatischen Carbonsäure) angewandt. Diese Carbonsäuren wirken als zusätzliches Treibmittel. Besonders bevorzugt sind Ölsäure, Laurinsäure, Trichloressigsäure, Cyanessigsäure, Phthalsäure, Adipinsäure, Propionsäure, Buttersäure, Fumarsäure, Isophthalsäure, Terephthalsäure, Rizinolsäure, Stearinsäure, Cyclohexancarbonsäure, $\omega$-Hydroxycapronsäure und hohe Säurezahlen aufweisende Polyester aus Dicarbonsäuren und Glykolen. Diese Säuren können erfindungsgemäß in Mengen zwischen 0 und ca. 5 Gew.-%, vorzugsweise 0,01 bis 2 Gew.-%, bezogen auf Reaktionsgemisch, eingesetzt werden. Vorzugsweise setzt man zusätzlich zu diesen Carbonsäuren etwa 0 bis 1 Teil Wasser, insbesondere 0 bis 0,01 Teile Wasser, bezogen auf Reaktionsgemisch zu.

Erfindungsgemäß können im Prinzip beliebige an sich bekannte Polyurethankatalysatoren mitverwendet werden, beispielsweise organische Zinnverbindungen, tertiäre Amine, Silaamine, Stickstoffbasen, Alkalihydroxide, Phenolate oder Alkoholate, Hexahydrotriazine etc. Erfindungswesentlich ist jedoch die Mitverwendung eines Katalysators, dessen Wirkung im wesentlichen erst bei höheren Temperaturen einsetzt; insbesondere sind dies bicyclische und monocyclische Amidine. Andere hitzeaktivierbare Katalysatoren sind z.B. Nickel-acetylacetonat, der Katalysator LC 5613 von Union Carbide, der Katalysator UL 29 von Witco und Dabco WT. Amidinkatalysatoren sind jedoch bevorzugt.

Erfindungsgemäß geeignete cyclische Amidine werden beispielsweise in US—PS 3 814 707 beschrieben. Man setzt sie im allgemeinen in Mengen von etwa 0,001 bis 10 Gew.-%, vorzugsweise 0,1 bis 5 Gew.-%, besonders bevorzugt 0,3 bis 1 Gew.-%, bezogen auf gesamtes Reaktionsgemisch, ein.

Erfindungsgemäß geeignete bicylische Amidine entsprechen beispielsweise der allgemeinen Formel

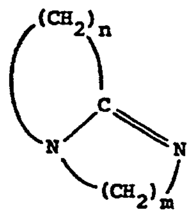

in welcher

m für eine ganze Zahl 2 oder 3 und

n für eine ganze Zahl zwischen 3 und 5 steht.

Erfindungsgemäß geeignete monocyclische Amidine sind z.B. Verbindungen der allgemeinen Formel

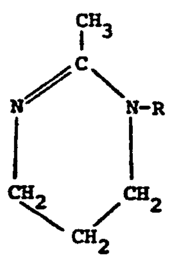

in welcher

R einen aliphatischen, cycloaliphatischen, araliphatischen oder aromatischen Rest mit 1 bis 15 Kohlenstoffatomen darstellt, welcher gegebenenfalls verzweigt ist und/ oder Heteroatome enthält.

Beispiele für R sind der Methyl-, Cyclohexyl-, 2-Ethylhexyl-, Benzyl-, Cyclohexylmethyl- und Ethoxyrest oder eine Gruppe der Formel

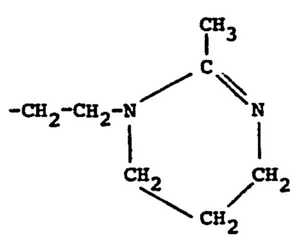

2,3 - Dimethyl - 3,4,5,6 - tetrahydropyrimidin und 1,5-Diazabicyclo[5.4.0]-undecen-5 sind die erfindungsgemäß bevorzugten Katalysatoren.

Erfindungsgemäß können auch oberflächenaktive Mittel (Emulgatoren und Schaumstabilisatoren) mitverwendet werden. Beispiele hierfür sind die Natriumsalze von Rizinusölsulfonsäuren oder von Fettsäuren, Salze von Fettsäuren mit Aminen, wie z.B. die Ammoniumsalze von Ölsäure und Diethylamin oder Stearinsäure und Diethanolamin. Auch Alkali- oder Ammoniumsalze von Sulfonsäuren, wie Dodecylbenzolsulfonsäure oder Dinaphthylmethandisulfonsäure, und auch von Fettsäuren wie Rizinolsäure oder von polymeren Fettsäuren können als oberflächenaktive Zusatzstoffe verwendet werden.

Geeignete Schaumstabilisatoren sind beispielsweise die an sich bekannten wasserlöslichen Ethersiloxane. Diese Verbindungen weisen im allgemeinen eine Struktur auf, in welcher ein Copolymer aus Ethylenoxid und Propylenoxid mit einem Polydimethylsiloxan radikal verbunden ist. Schaumstabilisatoren dieses Typs werden beispielsweise in der US—PS 3 201 372 (Spalte 3) beschrieben. Im allgemeinen werden etwa 0,1 bis 10 Gew.-Teile Schaumstabilisator, bezogen auf 100 Teile der höhermolekularen Polyhydroxylverbindung 2, eingesetzt.

Erfindungsgemäß bevorzugt ist es, bis zu 500 Gew.-Teile, vorzugsweise 300 bis 500 Gew.-Teile, bezogen auf 100 Gew.-Teile der höhermolekularen Polyhydroxylverbindung 2, eines feinverteilten anorganischen Füllstoffes mitzuverwenden (beispielsweise mit einer Teilchengröße von 0,3 bis 80 $\mu$). Geeignete anorganische Füllstoffe sind beispielsweise Bariumsulfat, Aluminiumoxidhydrat, Kieselgur und Tonerden (z.B. Kaolin), Talk, Quarz, Schiefer, Ruß etc. Die Mitverwendung von Füllstoffen ist nicht nur vorteilhaft für die mechanischen Eigenschaften der Textilbeschichtung sondern vermindert auch die Brennbarkeit des Textils beträchtlich, so daß auch ohne Mitverwendung von Flammschutzmitteln Brandtests wie der Motor Vehicle Safety Standard 302 erfüllt werden. Außerdem wird die Wirtschaftlichkeit des Verfahrens erhöht. Im allgemeinen muß der Füllstoff in einem getrennten Verfahrensschritt mit den Polyurethanbildenden Komponenten mit Hilfe der üblichen Mischvorrichtungen homogen vermischt werden. Bariumsulfat, Calziumcarbonat und Aluminiumoxid sind erfindungsgemäß bevorzugte Füllstoffe.

Erfindungsgemäß können auch Reaktionsverzögerer wie Chlorwasserstoff oder organische Säurehalogenide mitverwendet werden, Zellregulatoren wie Paraffine, Fettalkohole oder Dimethylpolysiloxane, Pigmente und Farbstoffe, flammhemmende Mittel wie Trischlorethylphosphat oder Ammoniumphosphat und Polyphosphate, Stabilisatoren, welche die Beständigkeit gegenüber Witterungseinflüssen und Alterung erhöhen, Weichmacher, Fungizide und Bakterizide.

In vielen Fällen ist es auch vorteilhaft, ein Antioxidans in Mengen bis zu 0,5 Gew.-Teile, bezogen auf Reaktionsgemisch, mitzuverwenden. Beispiele hierfür sind das 2,6-Di-t-butyl-4-methylphenol, Hydrochinon, 4-t-Butylbrenzchatechin, Resorcin und 4-Methoxyphenol.

Weitere Beispiele für oberflächenaktive Mittel, Schaumstabilisatoren, Zellregulatoren, Reaktionsverzögerer, Stabilisatoren, Flammschutzmittel, Farbstoffe, Weichmacher, Füllstoffe, fungizide und bakterizide Mittel und Einzelheiten über Verwendung und Wirkungsweise dieser Zusatzstoffe sind beispielsweise dem Kunststoff-Handbuch, Band VI, herausgegeben von Vieweg und Höchtlen, Carl-Hanser-Verlag, München, 1966, auf den Seiten 103 bis 113 zu entnehmen.

In manchen Fällen ist es erfindungsgemäß bevorzugt, übliche wasserbindende Mittel mitzuverwenden. Bevorzugt sind in diesem Zusammenhang die Alkalimetall-Aluminiumsilikate (sogenannte Molekularsiebe) wie sie unter dem Handelsnamen Zeolith bekannt sind und beispielsweise in US—PS 3 326 844 beschrieben werden. Auch die Oxide von Calcium und Barium können verwendet werden. Die wasserbindenden Mittel werden im allgemeinen in einer solchen Menge eingesetzt, daß sie die maximal anwesende Menge an Feuchtigkeit, welche durch die Füllstoffe eingeschleppt wird, binden können. Dies sind in der Regel etwa 1 bis 10 Gew.-%, bezogen auf gesamtes Reaktionsgemisch. Vorzugsweise wird die Zeolith-Paste als etwa 50 %ige Suspension in Rizinusöl eingesetzt.

Im erfindungsgemäßen Verfahren können die Reaktionskomponenten in an sich bekannter Weise in einem Einstufen-, Prepolymer- oder Semiprepolymerverfahren umgesetzt werden, wobei machinelle Einrichtungen benutzt werden, wie sie beispielsweise in US—PS 2 764 565 beschrieben werden. Weitere Einzelheiten finden sich im Kunststoff-Handbuch, Band VI, auf den Seiten 121—205.

Im erfindungsgemäßen Verfahren können im Prinzip beliebige Textilmaterialien, wie Gewebe, Gewirke, Vliese und Filze aus natürlichen und/oder synthetischen Fasern eingesetzt werden. Bevorzugt werden erfindungsgemäß jedoch Teppichmaterialien beschichtet. Die Teppichfasern können aus beliebigen Materialien (z.B. Baumwolle, Wolle, Polyamid, Kunstseide, Polyacrylnitril, Polyvinylhalogeniden etc.) bestehen und im Teppichrücken (der z.B. aus Jute oder Polypropylen besteht) auf beliebige Weise (z.B. nach dem Tufting-Verfahren) verankert sein. Der Schlagschaum bzw. das schaümfähige Reaktionsgemisch kann entweder nach dem Umkehrverfahren oder auch nach dem Direktbeschichtungsverfahren mittels eines Rakelmessers auf das textile Substrat aufgebracht werden. Die für das erfindungsgemäße Verfahren erforderlichen Apparaturen sind solche der aus der Textilbeschichtung bzw. aus der Schaumstoffindustrie bekannten Art.

Im allgemeinen wird die Polyurethan-Schaumschicht im erfindungsgemäßen Verfahren in einer Dicke zwischen etwa 1 und 25 mm auf das textile Substrat aufgetragen und hat nach der Aushärtung in der geheizten Form unter Druck eine geschlossene Oberflächenhaut. Die Dichte des Schaums liegt im allgemeinen zwischen 150 und 1500, vorzugsweise 300 bis 1000, besonders bevorzugt 500 bis 800 kg/m³.

Reaktionszeit, Verarbeitungstemperatur, Druck und genaue Zusammensetzung des schäumfähigen bzw. mechanisch aufgeschäumten Reaktionsgemisches sind voneinander abhängige Parameter, die der Durchschnittsfachmann im Hinblick auf die gewünschten Eigenschaften des Endprodukts variieren kann. Die folgenden Beispiele dienen zur Erläuterung des erfindungsgemäßen Verfahren. Wenn nicht anders vermerkt, sind Mengenangaben als Gewichtsprozente bzw. Gewichtsteile zu verstehen.

Im folgenden werden die Ausgangsverbindungen, welche in den Beispielen eingesetzt wurden, beschrieben:

*Polyol A*: Endständig mit Ethylenoxid modifiziertes Polypropylenglykol mit einem Molekulargewicht von 4800 und einer OH-Zahl von 35.

*Polyol B:* Endständig mit Ethylenoxid modifiziertes Polypropylenglykol mit einem Molekulargewicht von 6000 und einer OH-Zahl von 28.

DEG: Diethylenglykol

L 6202; L 5612: Polysiloxane der Firma Union Carbide Katalysator:

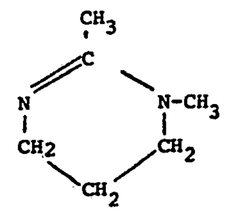

HEA: 2-Hydroxyethylacrylat

HPA: 2-Hydroxypropylacrylat

AIBN: Azobisisobutyronitril

Zeolith T-Paste: handelsübliche Dispersion eines Natriumaluminiumsilkats in Rizinusöl

CS—15: ist ein Butadien-Styrol-Copolymer mit endständigen Hydroxylgruppen (Handelsprodukt der Firma ARCO)

R45HT: Polybutadien mit endständigen Hydroxylgruppen (Handelsprodukt der Firma ARCO)

Polyisocyanate A und B: Polymethylenpolyphenyl-polyisocyanate mit einem NCO-Gehalt von 31,5% und einer mittleren Funktionalität zwischen 2,6 und 2,7

Polyisocyanate C: teilweise carbodiimidisiertes Diphenylmethandiisocyanat; NCO-Gehalt: 30%; Funktionalität: ca. 2

Polyisocyanat D: durch Umsetzung mit einer kleinen Menge Dipropylenglykol verflüssigtes Diphenylmethandiisocyanat; NCO-Gehalt: 22,6%.

Beispiel 1 bis 9

Bei der Herstellung der Teppichrückenbeschichtung in den Beispielen wurde folgende allgemeine Arbeitsweise eingehalten: Zunächst wurden alle Komponenten mit Ausnahme des Füllstoffs und des Polyisocyanats vorvermischt. Danach wurde in das so erhaltene flüssige Gemisch der Füllstoff mittels eines statischen Mischers eingebracht und anschließend mittels eines Mischkopfs das Polyisocyanat eingetragen. Aus dem Mischkopf wurde das Reaktionsgemisch durch ein Rohr geleitet, in welches über eine Düse Luft eingetragen wurde. Danach wurde das Gemisch aus Luft, Füllstoff und Polyurethan-bildenden Komponenten in einem schaumerzeugenden Mischer homogenisiert.

Das auf diese Weise mechanisch aufgeschaümte Reaktionsgemisch wurde direkt auf den Teppich aufgetragen und mittels eines Rakelmessers gleichmäßig verteilt. Danach wurde der beschichtete Teppich in einem Heizkanal 4 Minuten bei 110°C gehalten. Danach war die Polyurethanbeschichtung voll aufgeschäumt und in einem klebfreien, gelierten Zustand. Sie konnte aufgerollt werden und war in diesem Zustand über längere Zeiträume hinweg lagerbeständig. Aus dem beschichteten Teppich geschnittene Stücke wurden in einer geheizten Form verpreßt. Die Rezepturen für die Beispiele 1 bis 9 sind in der folgenden Tabelle zusammengestellt.

| Beispiel | Polyol A | CS15 | R45HT | DEG | Öl-säure | Essig-saure | L6202 | Kataly-sator | HEA | HPA | Di-Cumyl Peroxid | AIBN | Barium Sulfat | Polyiso Cyanat A | Polyiso Cyanat B | Index |
|---|---|---|---|---|---|---|---|---|---|---|---|---|---|---|---|---|
| 1 | 90 | – | 10 | – | – | .25 | 1.0 | 0.3 | 10 | – | – | 0.1 | 320 | – | 21 | 110 |
| 2 | 90 | – | 10 | – | – | .25 | 1.0 | 0.3 | – | 10 | – | 0.1 | 320 | – | 20 | 110 |
| 3 | 95 | – | – | 7 | 1.0 | – | 1.0 | 0.3 | 3 | – | – | 0.1 | 320 | – | 29 | 110 |
| 4 | 95 | – | – | 7 | 1.0 | – | 1.0 | 0.3 | 5 | – | – | 0.1 | 320 | – | 32 | 110 |
| 5 | 95 | – | – | 7 | 1.0 | – | 1.0 | 0.3 | 10 | – | – | 0.1 | 320 | – | 38 | 110 |
| 6 | 95 | – | – | 7 | 1.0 | – | 1.0 | 0.3 | – | 10 | – | 0.1 | 320 | – | 36 | 110 |
| 7 | 90 | 10 | – | – | – | .25 | 1.0 | 0.3 | 10 | – | 0.1 | – | 320 | – | 21 | 110 |
| 8 | 85 | 15 | – | – | – | .25 | 1.0 | 0.3 | 10 | – | – | 0.1 | 320 | – | 25 | 130 |
| 9 | 85 | 15 | – | – | – | .25 | 1.0 | 0.3 | 10 | – | – | 0.1 | 320 | 25 | – | 130 |

In den Beispielen 1 bis 6 wurde der mit dem gelierten Schaum beschichtete Teppich in eine auf 160°C vorgewärmte Form gebracht und bei einem Druck von 0,035 bar etwa 1 Minute verpreßt. Die Teppiche waren zuvor drei Wochen lang gelagert worden. Jedes der fertig ausgehärteten Produkte hatte eine hervorragende Konturbeständigkeit und Biegefestigkeit; die Struktur der Form war in der Schaumstoffoberfläche exakt wiedergegeben.

In den Beispielen 7 bis 9 waren die Teppiche fünf Wochen gelagert worden und wurden — mit zu den Beispielen 1 bis 6 vergleichbarem Resultat — bei einer Formtemperatur von 140°C verpreßt.

Wurden vergleichsweise in den Beispielen 2 und 3 als Vernetzungsmittel anstelle des Acrylats 3, 5 bzw. 10 Teile von Trimethylolpropan-di-2-propenylether der Formel

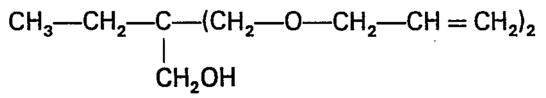

verwendet, so wurden Schäume mit schlechter Formbeständigkeit erhalten.

Beispiel 10

Besonders gute Ergebnisse wurden nach der oben angegebenen allgemeinen Arbeitsweise mit der folgenden Formulierung erhalten:

88 Teile Polyol B
12 Teile DEG
10 Teile HEA
4 Teile L5612
0,3 Teile AIBN
0,45 Teile Katalysator
1 Teil Ölsäure
320 Teile Bariumsulfat
100 Teil Polyisocyanat D (Index 150)

Beispiel 11

660 Teile eines technischen Polymethylenpolyphenyl-polyisocyanats (85% Zweikerngehalt, davon 10% 2,4'-Isomeres; 15 Gew.-% höherkernige Anteile) wurden mit 125 Teilen 2-Hydroxyethylacrylat bei 40°C im Verlauf von 10 Minuten versetzt. Das Reaktionsgemisch erhitzte sich auf 90°C. Anschließend wurde der Reaktionsansatz eine Stunde lang bei 80°C gehalten. Das Produkt hatte einen NCO-Gehalt von 21,9%. Aus diesem Prepolymeren konnten analog zu den Beispielen 1—10 ebenfalls hervorraagend formbeständige schaumbeschichtete Teppiche hergestellt werden.

Die nach den Beispielen 1 bis 11 erhaltenen beschichteten Teppiche überstehen die folgenden physikalischen Testbedingungen ohne Beeinträchtigung ihrer mechanischen Eigenschaften:

1. Hitzealterung bei 70°C im Verlauf von 14 Tagen
2. Kältealterung bei —30°C im Verlauf von 14 Tagen
3. Hydrolysentest bei 100% relativer Luftfeuchtigkeit und 35°C im Verlauf von 72 Stunden.

**Patentansprüche**

1. Verfahren zur Herstellung eines dreidimensional geformten, mit einer Polyurethanschaumbeschichtung versehenen Textils, wobei man

A) in einer ersten Stufe eine geschäumtes bzw. schäumfähiges Reaktivgemisch Polyurethan-bildender Komponenten, bestehend aus
1. einem Polyisocyanat,
2. einer organischen Verbindung mit mindestens 2 gegenüber Isocyanaten reaktiven Wasserstoffatomen und einem Molekulargewicht zwischen 400 und 16000, welche im wesentlichen keine ethylenisch ungesättigten Gruppen enthält,
3. einem hitzeaktivierbaren Katalysator für die Reaktion der Komponenten 1 und 2,
4. einem Treibmittel bzw. einem den Schaum bildenden inerten Gas und
5. einem oberflächenaktiven Mittel als Schaumstabilisator

aufträgt,

B) in einer zweiten Stufe das beschichtete Textil 15 Sekunden bis 10 Minuten lang bei 25 bis 120°C hält, bis die Polyurethan-bildenden Komponenten einen gelierten, klebfreien, noch thermoplastischen Schaum gebildet haben und

C) das schaumbeschichtete Textil durch Heißverpressen unter Verformung aushärtet,

dadurch gekennzeichnet, daß das Polyurethanbildende Reaktionsgemisch als zusätzliche Komponente

6. einem freien Radikalinitiator und
7. einen mindestens eine Hydroxylgruppen aufweisenden Ester von Acrylsäure oder einer Alkylacrylsäure enthält.

2. Verfahren nach Anspruch 1, dadurch gekennzeichnet, daß als Komponente 7 eine Verbindung der folgenden allgemeinen Formel eingesetzt wird:

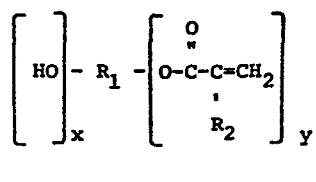

in welcher

$R_1$ einen x + y -wertigen, gegebenfalls verzweigten Alkylen-, Arylen- oder Aralkylenrest mit 1 bis 18 C-Atomen und

$R_2$ Wasserstoff oder eine Alkylgruppe mit 1 bis 18 C-Atomen darstellen und wobei

x und y für ganze Zahlen zwischen 1 und 7 stehen, die Summe aus x und y jedoch 8 nicht überschreitet.

3. Verfahren nach Anspruch 2, dadurch gekennzeichnet, daß eine Verbindung der angegebenen allgemeinen Formel eingesetzt wird, in welcher $R_1$ für eine Alkylengruppe mit 1 bis 4 C-Atomen und $R_2$ für Wasserstoff oder eine Methylgruppe stehen und in welcher x und y beide 1 sind.

4. Verfahren nach Anspruch 1, dadurch gekennzeichnet, daß als Komponente 7 2-Hydroxyethylacrylat und/oder 2-Hydroxypropylacrylat eingesetzt werden.

5. Verfahren nach Anspruch 1 bis 4, dadurch gekennzeichnet, daß als Komponente 6 Azobisisobutyronitril eingesetzt wird.

6. Verfahren nach Anspruch 1 bis 5, dadurch gekennzeichnet, daß Komponente 7 mit zumindest einem Teil von Komponente 1 zu einem Voraddukt umgesetzt wird.

**Revendications**

1. Procédé pour la préparation d'un textile muni d'un revêtement de mousse de polyuréthanne, mis dans une forme tridimensionnelle, dans lequel:

A) on applique dans une première étape un mélange réactif de composants générateurs de polyuréthanne, expansé ou pouvant être expansé, consistant en
1. un polyisocyanate
2. un composé organique ayant au moins deux atomes d'hydrogène réactifs vis-à-vis des isocyanates et d'un poids moléculaire compris entre 400 et 16000, qui ne contient dans l'essentiel pas de groupe à insaturation éthylénique,
3. un catalyseur activable par la chaleur, pour la réaction des composants 1 et 2,
4. un agent porogène ou un gaz inerte formant la mousse, et
5. un agent tensioactif comme stabilisant de mousse

B) on maintient dans une seconde étape le textile revêtu à 25 à 120°C pendant 15 secondes à 10 minutes, jusqu'à ce que les composants générateurs de polyuréthanne aient formé une mousse gélifiée, non collante, encore thermoplastique et

C) on durcit le textile revêtu de mousse par pressage à chaud et mise en forme, caractérisé en ce que le mélange de réaction générateur de polyuréthanne contient comme composants supplémentaires
6. un générateur de radicaux libres et
7. un ester d'acide acrylique ou d'un acide alkylacrylique comportant au moins un groupe hydroxy.

2. Procédé selon la revendication 1, caractérisé en ce que l'on utilise comme composant 7 un composé de formule générale

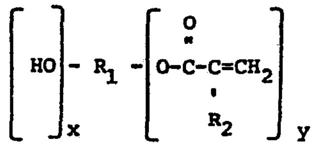

dans laquelle $R_1$ représente un reste alkylène, arylène ou alkylarylène de valence x + y, éventuellement ramifié, en $C_1$—$C_{18}$ et $R_2$ représente l'hydrogène out un groupe alkyle en $C_1$—$C_{18}$, et x et y représentent des nombres entiers entre 1 et 7, mais la somme de x et y ne dépasse pas 8.

3. Procédé selon la revendication 2, caractérisé en ce que l'on utilise un composé de formule générale indiqué, dans laquelle $R_1$ représente un groupe alkylène en $C_1$—$C_4$ et $R_2$ l'hydrogène ou un groupe méthyle et ou x et y sont tous deux égaux à 1.

4. Procédé selon la revendication 1, caractérisé en ce que l'on utilise comme composant 7 l'acrylate de 2-hydroxyéthyle et/ou l'acrylate de 2-hydroxypropyle.

5. Procédé selon les revendications 1 à 4, caractérisé en ce que l'on utilise comme composant 6 l'azobisisobutyronitrile.

6. Procédé selon les revendications 1 à 5, caractérisé en ce que l'on fait réagir le composant 7 avec au moins une partie du composant 1 en un préadduct.

**Claims**

1. Process for the preparation of a three-dimensionally moulded polyurethane-foam-backed fabric by

A) in a first stage, applying a foamed or foamable reactive mixture of polyurethane-forming components, consisting of
1. a polisocyanate,
2. an organic compound for containing at least two hydrogen atoms capable of reacting with isocyanate groups, having a molecular weight of between 400 and 16,000 and containing essentially no ethylenically unsaturated groups;
3. a heat activated catalyst for the reaction between components (1) and (2);
4. a blowing agent, or an inert gas for forming the foam and

5. a surface active agent as foam stabilizer.

B) in a second stage, heating the coated fabric for from 15 seconds to 10 minutes at 25 to 120°C until the polyurethane-forming components have produced a gelled, tack-free, still thermoplastic foam and

C) shaping and curing the foam-backed fabric by hot moulding, characterised in that the polyurethane-forming reaction mixture contains as additional components
6. a free radical initiator and
7. an ester of acrylic acid or of an alkyl acrylic acid containing at least one hydroxyl group.

2. Process according to claim 1, characterised in that a compound of the following general formula is used as component 7:

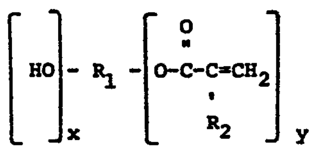

in which

$R_1$ represents an x + y -valent, optionally branched alkylene, arylene or aralkylene radical with 1 to 18 carbon atoms and
$R_2$ represents hydrogen or an alkyl group with 1 to 18 carbon atoms and wherein
x and y represent integers between 1 and 7, the sum of x and y not however exceeding 8.

3. Process according to claim 2, characterised in that a compound of the indicated general formula is used in which $R_1$ represents an alkylene group with 1 to 4 carbon atoms and $R_2$ represents hydrogen or a methyl group and in which x and y are each 1.

4. Process according to claim 1, characterised in that 2-hydroxy-ethyl acrylate and/or 2-hydroxypropyl acrylate are used as component 7.

5. Process according to claims 1 to 4, characterised in that azobisisobutyro nitrile is used as component 6.

6. Process according to claims 1 to 5, characterised in that component 7 is reacted with at least a part of component 1 to form a preadduct.